# EUROPEAN PATENT SPECIFICATION

(11) **EP 2 393 185 B1**
(45) Date of publication and mention of the grant of the patent: **21.09.2016**
(21) Application number: 11168564.0
(22) Date of filing: 02.06.2011
(51) Int. Cl.: H02J 9/00

(54) **A low power stand by power system by ultrasonic remote**
Bereitschaftsbetrieb-System mit Ultraschall-Fernsteuerung
Support basse consommation par système d'alimentation à distance ultrasonique

(30) Priority: 04.06.2010 TR 201004521
(43) Date of publication of application: 07.12.2011
(73) Proprietor: Vestel Elektronik Sanayi ve Ticaret A.S., 45030 Manisa (TR)
(72) Inventor: Kirisken, Barbaros, 45030 Manisa (TR); Yatir, Mustafa Nevzat, 45030 Manisa (TR)
(74) Representative: Cayli, Hülya

(56) References cited:
- EP-A2- 1 122 872
- EP-A2- 2 106 009
- GB-A- 2 465 343

## Description

### Technical Field

Present invention offers an apparatus and method to reduce average stand by power consumption by interrupting mains input using a relay, which can be triggered to power on the device by a remote control using ultrasonic signal.

### Prior Art

Electronic devices which can be controlled by a remote control and which have a stand-by mode, in which the device is not operating but waiting a command to go on operation, consume some power when the device is in stand-by mode. The stand-by power consumption may be due to a stand by LED, a display, a circuitry which may have several jobs or a stand-by circuitry, which holds the device in stand-by mode and waits for a power on command received from user interface or a remote control. Whatever the power consuming component of the device in stand by mode is, it requires a continuous electrical power to be supplied to the device to operate.

In stand-by mode, the power line to the components employed in the actual operation of the device is cut and only stand-by components are active. A common power supply for both stand-by mode and operation mode is not preferred as interruption of power lines to the components, which are disabled in stand-by mode, requires a complex switching circuitry. Hence, in most of the devices, a stand-by power supply is employed along with the main power supply. In stand-by mode, the power line going into main power supply is interrupted, powering off all but stand-by components. The stand-by power supply feeds the stand-by components, holding device ready for a power-on operation.

Depending on the stand-by components and stand-by circuit complexity, a stand-by power supply may consume several watts. Not only the power consumption of the stand by components is important here but the nature of low power power supplies, especially switching mode power supplies, creates considerable power consumption in stand-by mode. Total stand-by power consumption of such devices will be important as tens of devices are kept in stand by mode. For instance, an intermediate size hotel, having TV sets in all the rooms will have a power consumption of several kilowatts/hour, which may be well enough to illuminate the rooms.

Yet another disadvantage of a stand-by mode is that device is hold in connection with the mains. Hence, even if the device is not fully operational, it may be hazardous in case of an accident or a component failure. A fire or an explosion when the device is in stand-by mode and probably unattended may result in great damage to the environment of the device, for instance, destruction of a whole house because of failure of a satellite receiver.

Several regulations are taken for the stand by power consumption of electronic devices in several regions. European regulations, considering the power consumption of devices not being actively used, restrict power consumption of a device in stand-by mode at a maximum value of 1 watt starting from December 2009. If the device has extra features related to stand by mode, such as a clock display, the allowable power consumption is 2 watts. These values will be halved starting from December 2012. The regulations also mention that devices should have an automatic stand-by or complete power off feature, which makes the device go to stand-by mode or cut all its connection to mains when the device is unattended.

Several methods and devices are proposed regarding the reduction of power consumption of devices in stand-by mode. Most of the proposals are named as "zero watt power consumption devices" which are in fact does not reduce the power consumption down to exactly zero.

The prior art document EP 1 783 387 proposes a system and method regarding power consumption in stand-by mode. The system employs a battery to power the stand-by circuitry and interrupts main inputs of the device when the device is in stand-by mode. The battery feeds the stand-by circuitry, namely "signal induction circuit". The invention comes over most of the disadvantages of the conventional stand-by circuits. However, as a battery is an energy storage with limited stored energy and limited life, the system cannot provide a long term stand-by solution. For instance, a stand-by mode that lasts for several days will probably make the stand-by circuit consume the battery and prevent a repowering. Even if the capacity of the battery is enough to keep stand-by mode for long periods, it should be charged when the device is powered on. Rechargeable batteries have limited number of charge-discharge cycles and a frequently used device which is kept in stand-by mode while unattended will degrade the stand-by battery in a short period.

The utility model document CN 201340528 proposes a similar method to the one in EP 1 783 387 except the system in CN 201340528 uses a capacitor to store the energy required for stand-by mode. This method has also serious drawbacks as although capacitors have much longer life than rechargeable batteries in terms of charge-discharge cycle, capacitors always suffer from leakage current, which decreases the stored energy on the capacitor appreciably even if the stored energy is not used externally. Moreover, a convenient long-lasting stand-by energy source cannot be made of conventional capacitors. The storage requirement can only be ensured by a super-capacitor, which has a much higher energy density than conventional capacitors, packaged in several Farads of capacitance. Moreover, super capacitors are components to be operated carefully in terms of operating conditions. A failure in this manner will probably result in an extended damage to the device as the capacitor has a high energy density, hence high destructive capability. These requirements mean a considerable cost for the device.

CN 201307902 utility model document proposes a mains switching system in which a relay is employed to switch the mains input and coil of the relay is driven by a thyristor which can be triggered by a light sensor. The system proposed in the document is capable of cutting all mains power and repowering without the use of an energy supply other than mains supply. However, the document lacks specifying the light to be sensed and used for repowering of the device. Since, naturally, visible and non-visible spectrum of light is available, light, being a triggering source without any coding involved, is useless. A light triggering circuit in this manner may easily and falsely power on.

Document GB 2 465 343 A discloses an apparatus and method to reduce average stand by power consumption according to the preamble of the independent claims.

### Brief Description of the Invention

Present invention provides an apparatus and a method to reduce the power consumption of a device in stand-by mode and remotely power on the device.

The invention is defined by the features of the independent claims. Preferred embodiments are defined in the dependent claims.

An embodiment of the present invention uses an ultrasonic receiver connected to a magnetic coil, which triggers a reed switch. Remote control part of the invention comprises an ultrasonic transmitter triggered by a button on remote control. The system comprises a relay connected to mains supply input, which is normally open. The reed switch is connected in parallel with relay switch and coil relay and reed switch is connected to mains supply input. When the button, which triggers ultrasonic transmitter on the remote control, is pressed, an ultrasonic signal at a specific frequency is transmitted to the ultrasonic receiver on the device. The signal received by the ultrasonic receiver is used to supply energy to the magnetic coil, which is placed next to the reed switch. The electromagnetic power generated by the coil closes the reed switch, energizing the relay coil, closing the relay and powering the whole device.

An object, not belonging to the invention, comprises a resonant relay, which can be triggered with both an ultrasonic signal of a specific frequency and electromagnetic coil. The resonant relay is used instead of conventional relay. As the resonant relay is used, ultrasonic receiver microphone, reed switch and magnetic coil are not needed. When an ultrasonic signal of a specific frequency is received by resonant relay, its resonant contactor vibrates, touching the fixed contact of the resonant relay. Hence current passes through the contacts and relay coil is energized. Then coil pulls the resonant contact towards fixed contact and keeps it in a connected position. The system is powered by the contact of contacts of the resonant relay.

The invention provides a safe and very low power consuming stand-by mode to the device as in stand-by mode, the mains input is interrupted and no energy is used for stand-by operation. Repowering energy is supplied initially from the external source, the remote control. The mains input is interrupted by mechanical switches, which ensure a safe power off state in case of a failure.

### Object of the Invention

The object of the present invention is to provide a low power stand-by mode for a device equipped with a remote control.

Another object of the present invention is to provide remotely powering on and off for a device.

Another object of the present invention is to increase electrical safety of a device when it is put in a stand-by mode.

Another object of the present invention is to provide automatic powering off of a device when the device is in a stand-by mode.

Another object of the present invention is to provide real-time clock dependent powering off of a device when the device is in stand-by mode.

### Brief Description of the Drawings

**Figure 1** shows basic circuit diagram of the switching block of a first embodiment of the present invention.
**Figure 2** shows the basic block diagram of a device equipped with a first embodiment of the present invention.
**Figure 3** shows detailed block diagram of a device equipped with a first embodiment of the present invention.
**Figure 4** shows the flow chart of the turn on operation.
**Figure 5** shows the flow chart of the stand-by and power off sequence.
**Figure 6** shows the remote control equipped with the present invention.
**Figure 7** shows a both ultrasonic and electromagnetically triggered relay.
**Figure 8** shows basic circuit diagram of the switching block of an object not belonging to the present invention.
**Figure 9** shows detailed block diagram of a device equipped with an object not belonging to the present invention.

The reference numbers as used in figures may possess the following meanings;

| | |
|---|---|
| Ultrasonic receiver microphone | (101) |
| Magnetic coil | (102) |
| Reed switch | (103) |
| Relay | (104) |
| Device | (105) |
| Line of mains | (106) |
| Neutral of mains | (107) |
| Ultrasonic signal | (108) |
| Relay coil | (109) |
| Relay switch | (110) |
| Remote control | (201) |
| Infrared signal | (202) |
| Infrared signal receiver | (203) |
| Main power supply | (204) |
| Standby controller | (205) |
| Standby power supply | (206) |
| Power on button | (301) |
| Main power supply controller | (302) |
| Standby power supply controller | (303) |
| Relay controller | (304) |
| Start | (401) |
| Device OFF state | (402) |
| Is relay activated? | (403) |
| Device temporary ON state | (404) |
| Infrared data received? | (405) |
| Device power ON state | (406) |
| Is power off signal received? | (407) |
| Power off device | (408) |
| Start | (501) |
| Device in stand-by state | (502) |
| Set the counter | (503) |
| Get real time clock | (504) |
| Decrease counter | (505) |
| Is counter cleared? | (506) |
| Power OFF device | (507) |
| End | (508) |
| Standby button | (601) |
| Power off button | (602) |
| Keypad | (603) |
| Coil | (715) |
| Fixed contact | (716) |
| Resonant contact | (717) |
| Ultrasonic signal receiving part of relay | (718) |
| Micrometric vibration | (719) |
| Magnetic core | (720) |
| Resonant Relay | (801) |
| Coil of resonant relay | (802) |
| Switch of resonant relay | (803) |

### Detailed Description of the Invention

Present invention offers a system and method to reduce power consumption of a device in stand-by mode and remotely power on and power off the device.

Present invention employs an ultrasonic transmitter and receiver for remote powering on the device. Ultrasound has a frequency higher than the upper limit of acoustic band, which is considered to be audible. Meanwhile, employment of ultrasound in short-medium distance operations is easy and widely applicable. Beyond its biomedical applications, ultrasound is widely used in industry for instance in ultrasonic welding and ultrasonic examination. It's also used for short-medium distance measurements, where other options such as infrared distance meters are considered to be insufficient. Ultrasonic signal can be shaped and modulated and hence can be used in simple communication systems.

Conventional devices having remote control uses a stand-by power supply apart from main power supply to supply energy to stand-by circuit and to receive and process remote control signals. Devices using this conventional system keep stand-by power supply on in stand-by mode and consume some power.

Present invention enables remotely switching on and off mains input of a device and hence very low average power consumption in stand-by mode.

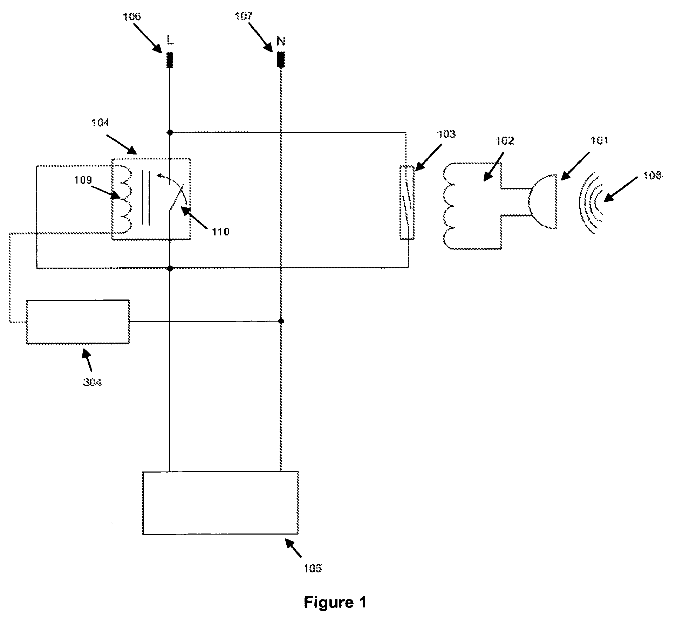

Figure 1 shows the basic circuit diagram of the main switching block of the first embodiment of the present invention. The invention uses a relay (104) to switch main power of the device. The relay coil (109) is connected in series with a relay controller (304), which allows coil to be energized as long as it's disabled by a control signal. As the relay controller (304) receives a control signal, it breaks at least one connection of relay coil (109) hence cuts the current passing through relay coil (109). For instance, the relay controller (304) may be another relay which is normally closed or a thyristor.

The relay switch (110) is connected in series with the line of the mains input (106). The relay switch (110) is normally open type so if the coil (109) is not energized, the relay (104) interrupts mains input.

The relay (104) may be single pole single throw type (SPST), to only switch the neutral (107) or the line (106) of the mains input, double pole single throw type (DPST), to switch both the neutral (107) and the line (106) of the mains input, or single pole double throw (SPDT) or double throw double pole type (DPDT) to route mains to another electrical connection when the device is powered off.

One end of the relay coil (109) and relay controller (304) couple is connected to neutral of the mains input (107). Other end of the relay coil (109) and relay controller (304) is connected to device end of the relay switch. If the relay (104) is switching the neutral (107), the reversal may be used for the connections of the relay coil (109) and relay controller (304). So as the relay coil (109) is energized, relay switch (110) keeps relay coil (109) energized until the relay controller (304) breaks the connection.

A reed switch (103) is connected in parallel with relay switch. The aim of the reed switch (103) is to do an initial switching, passing a current even if the relay switch (110) is open and powering the device so that the relay coil (109) is energized and closes relay switch (110), connecting mains input to the device. The reed switch (103) can be actuated by a small magnetic coil (102) placed close enough to actuate the reed switch (103). Magnetic coil (102) creates an electro magnetic force when a voltage is applied to its terminals and actuates reed switch (103).

The magnetic coil (102) next to the reed switch (103) is connected to an ultrasonic receiver microphone (101).The microphone (101) converts received ultrasonic signal (108) having a specific frequency to electrical energy and creates a voltage over the magnetic coil (102) and energizes the magnetic coil (102) when it receives said ultrasonic signal.

When the device is plugged in the mains, it's not powered immediately as the device requires to be energized by the relay (104) or by the resonant relay (801) by switching. If an ultrasonic signal (108) is received by ultrasonic receiver microphone (101), the microphone (101) energizes magnetic coil (102) and magnetic coil (102) actuates reed switch (103). The reed switch (103) closes mains connection, initially energizing the relay (104) coil and the device (105). When the relay (104) coil is energized, relay switch is closed; keeping the relay (104) coil and device energized even after the ultrasonic signal (108) is cut.

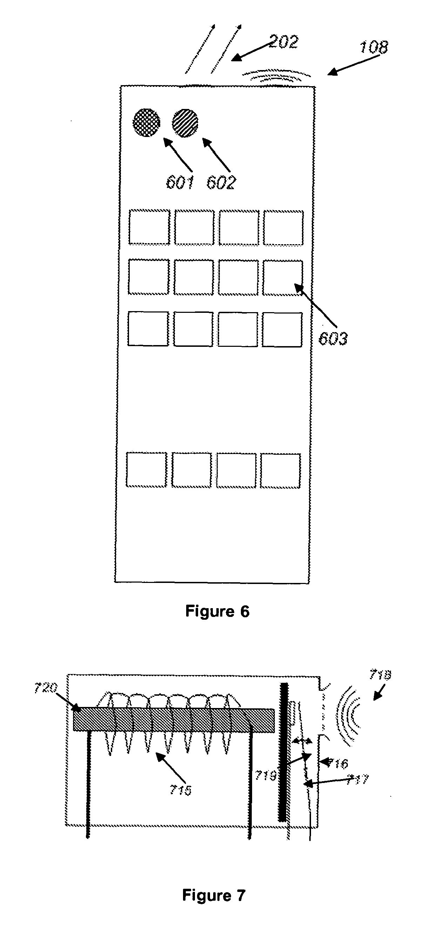

Alternatively, a resonant relay (801) may well be designed. An exemplary diagram of a resonant relay (801) is given in figure 7. The resonant relay (801) is capable of switching by both an electromagnetic coil (715) and ultrasonic signal. A resonant contact (717) is placed as one contact of the relay switch. A fixed contact (716) is placed at a micrometric distance to the resonant contact (717). The resonant contact (717) is designed to vibrate at a specific ultrasonic frequency such that when an ultrasonic signal at said specific frequency is received by the ultrasonic receiving part of the relay (718) and resonant contact (717), resonant contact (717) starts a micrometric vibration (719), touching to the fixed contact (716) and separating from the fixed contact (716). An electromagnetic actuation is also possible by energizing the coil (715) wound on the magnetic core (720). When the coil is energized, it pulls the resonant contact (717) towards the fixed contact (716), as in a conventional relay.

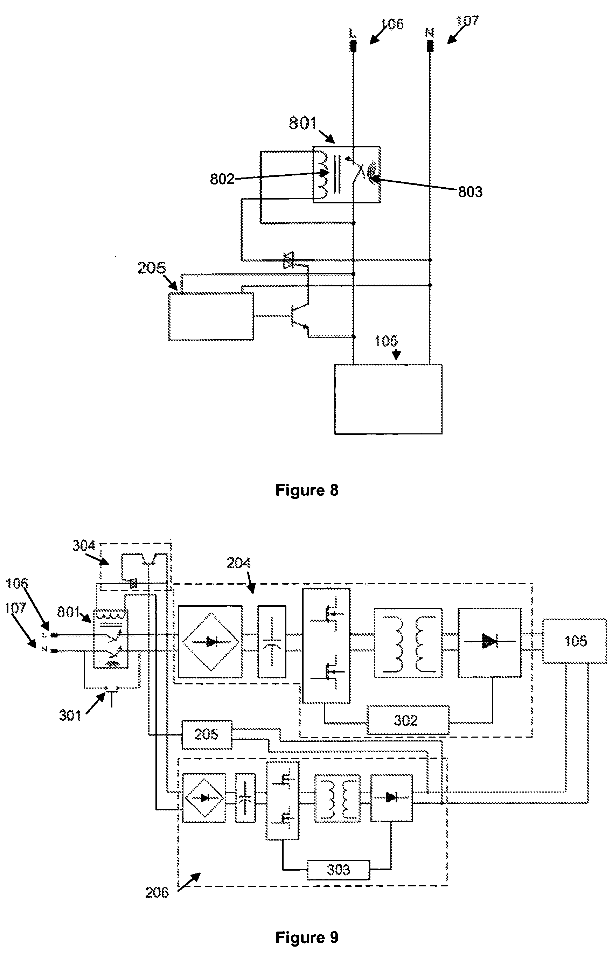

In an object not belonging to the invention given in figure 8, the stated resonant relay (801) is used instead of the conventional relay (104), reed switch (103), magnetic coil (102) and ultrasonic receiver microphone (101). When an ultrasonic signal (108) is received by resonant relay (801), its resonant contact (717) vibrates and contacts with the fixed contact (716). This vibration and contact allows some current to pass through the contacts (716 and 717) of the resonant relay (801), energizing the rest of the system. As the coil of the resonant relay (715) is connected to the device end contact of the resonant relay (716 or 717) as in embodiment 1, passage of a current through contacts of the resonant relay (716 and 717) creates an electromagnetic force in the coil (715) of the resonant relay (801) and the resonant contact (717) is pulled towards fixed contact (716).

A momentary action power-on switch (301) may be connected in parallel with the reed switch (103), relay switch (110) or contacts of the resonant relay (716, 717) so that the device can be turned on without receiving ultrasonic signal (108).

An exemplary remote control (201) for the present invention is given in figure 6. An ultrasonic transmitter is placed in the remote control (201). The transmitter sends an ultrasonic signal (108) having a specific frequency to the ultrasonic receiver microphone (101).

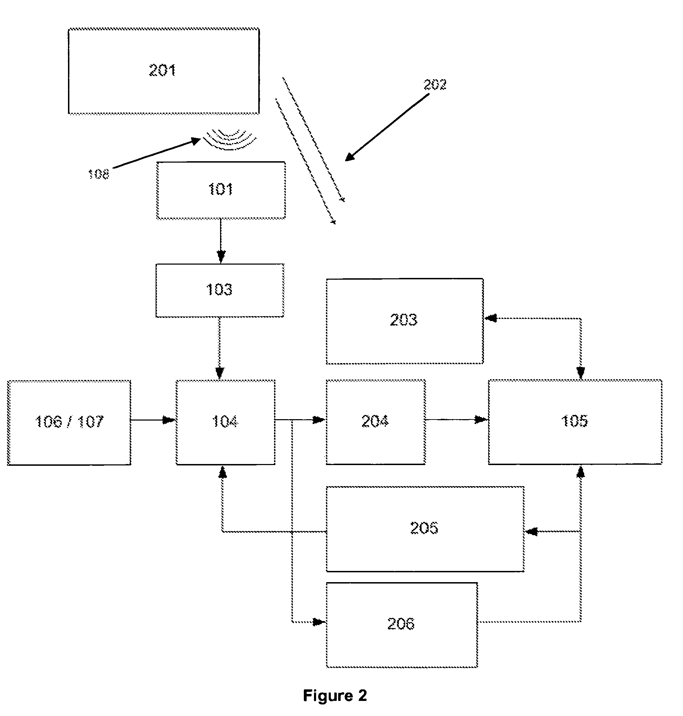

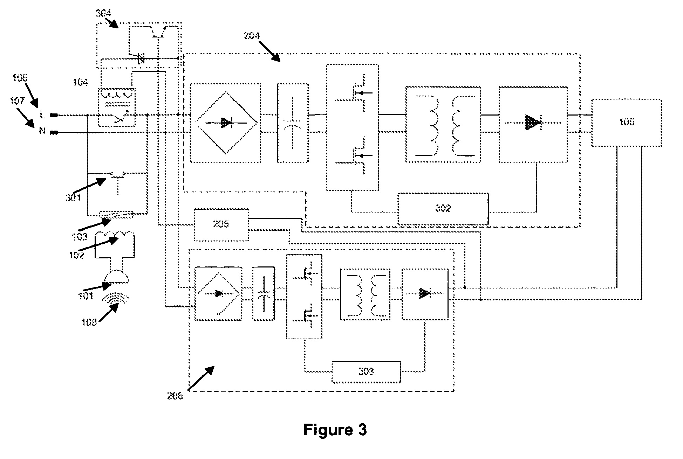

The block diagram of a device equipped with the first embodiment of the present invention is given in Figure 2. A detailed block diagram of the device equipped with the first embodiment of the present invention is also given in Figure 3.

In the first embodiment of the invention, remote control (201) sends ultrasonic signal (108) and infrared signal (202). The ultrasonic signal (108) is received by ultrasonic receiver microphone (101). As the ultrasonic signal (108) is received, the reed switch (103) is closed, energizing the relay coil (109), switching the relay switch (110) hence turning on the system. When the relay switch (110) is closed, stand-by power supply (206) and main power supply (204) is activated. Thus the device (105) is energized. A stand-by controller (205), which is powered by stand-by power supply (206), controls the relay controller (304).

In an object not belonging to the invention, remote control (201) sends ultrasonic signal (108) and infrared signal (202). The ultrasonic signal (108) is received by resonant relay (801). As the ultrasonic signal (108) is received by the resonant relay (801), resonant contact of the resonant relay (717) vibrates, passing some current through the contacts of the resonant relay (716 and 717). The current also passes through magnetic coil of the resonant relay (715) switching the relay switch (110) hence turning on the system. When the relay switch (110) is closed, stand-by power supply (206) and main power supply (204) is activated. Thus the device (105) is energized. A stand-by controller (205), which is powered by stand-by power supply (206), controls the relay controller (304).

When the device (105) is to be put in stand-by mode, a stand-by signal is sent from remote control (201) to the device by using infrared signal (202). The infrared signal (202) is received by the infrared receiver (203). A stand-by signal is then sent to the stand-by controller (205) and stand-by controller (205) powers off the main supply (204), hence puts the device in a conventional stand-by mode. The stand-by controller (205) may then further send a control signal to the relay controller (304) to cut the relay coil current of the relay (104) or the resonant relay (801). When the coil current is cut, the relay (104) or the resonant relay (801) on the mains input is opened and the whole system is powered off.

Several connections between infrared receiver (203) and stand-by controller (205) are possible. The infrared receiver (203) may be directly connected to stand-by controller (205) and stand-by controller decodes infrared signals and controls the system accordingly. A microcontroller may be employed for receiving infrared signals and processing. In this case infrared receiver (203) is connected to microcontroller and microcontroller is connected to stand-by controller (205). As a signal related to stand-by controller (205) is received, microcontroller decodes infrared signals and send appropriate control signals to the stand-by controller (205). In a third case the infrared receiver (203) may be connected to both the microcontroller and stand-by controller (205), giving microcontroller and stand-by controller (205) the opportunity to process infrared signals independently.

A direct power off operation is also available. If a specified power off signal is sent by remote control (201) and received by infrared receiver (203), the stand-by controller (205) sends a control signal to the relay controller (304) and relay controller (304), interrupts relay coil current of the relay (104) or the resonant relay (801), opening the relay switch (110) or contacts of the resonant relay (716 and 717) hence powering off the system.

A time delay may be used between the conventional stand-by and complete power off so that all stand-by operations does not end up with complete power off. A counter may be used to count the delay time.

The delay time further can be adjusted according to real clock time so for different periods of the day, different time delays to completely power off the device may be used. This adds intelligence to power off system, for instance, holding the device in stand-by for an hour during day time but powering off the device after only 10 minutes stand-by after 11.00 pm.

The power off operation may be controlled not only by the stand-by signal but a different power off signal sent by the remote control (201). Distinct stand-by button (601) and power off button (602) may be employed on the remote control (201).

A power-on signal may be sent by the remote control (201) via ultrasonic transmitter. Power on signal may be controlled by either the stand-by button (601) on the remote control or a separate power-on button.

An infrared power-on signal may be employed along with the ultrasonic signal (108) for power on operation. Addition of infrared power-on signal in this case may be used for preventing the device from falsely powering on. A noise, which has the same frequency with the remote control (201) and ultrasonic receiver microphone (101), may trigger the power on circuit. However, if an infrared signal is employed along with the ultrasonic signal (108), a checking may be done on the device such that, when the device is powered on by ultrasonic signal (108), infrared receiver is checked for any incoming infrared signals. If infrared signal is not detected by infrared signal receiver (203), a signal is sent to stand-by controller (205) to power off the device. This prevents falsely powering off the device.

If infrared power on signal is to be used along with ultrasonic signal, the power on button (301) may be double pole type so that another control signal can be sent to stand-by controller (205) to inhibit infrared signal checking.

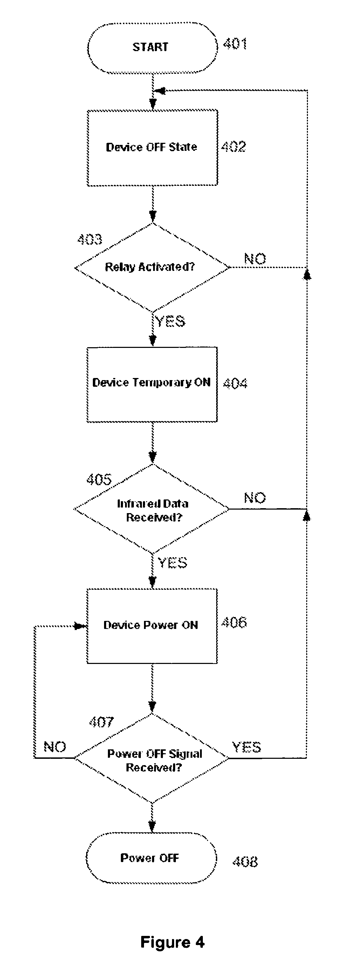

An algorithm for powering on the device is given in figure 4. When an ultrasonic signal is received (403), the relay coil is energized, turning on the device temporarily (404). If infrared checking is used, infrared signal is checked (405). Device is kept powered on if the infrared signal exists. If infrared signal is not detected, the ultrasonic signal is checked. Device is kept in temporary on state if ultrasonic signal is present. If ultrasonic signal is not also detectable, this turn on is evaluated as false turn on and device is turned off (402). Until a power off command is received, the device is immediately turned on. As the power off command is received (406), device is turned off.

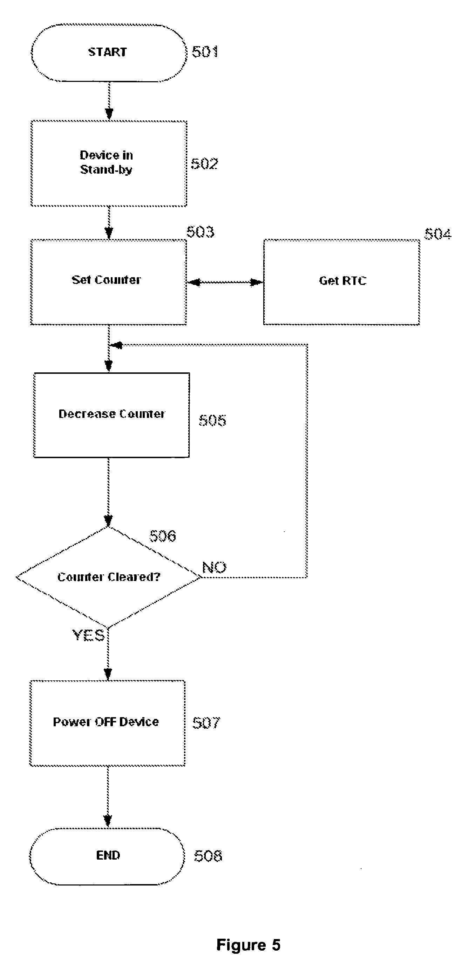

An algorithm for putting the device into stand-by mode is given in figure 5. As a stand-by command is received, the device is first put into conventional stand-by state (502). If a time delay is used between stand-by and power off, counter is set to a predefined value (503). If different time delays for different real-time clock values are used, the real-time clock value is read (504) and appropriate counter value is set. Then the counter starts to count down (506) and as the counter is cleared (is equal to zero) (505) the device is powered off (507).

## Claims

1. A stand-by power system comprising at least a relay (104), which comprises at least one switch (110) connected to line (106) and/or neutral (107) of mains input, an infrared receiver (203), a main power supply (204), a stand-by power supply (206) and a remote control (201), comprising a stand-by button (601) and an infrared transmitter, and wherein said system comprises a microcontroller, **characterized in that** it further comprises;
- a relay controller (304) connected in series with a coil (109) of said relay (104), wherein said relay controller (304) cuts a first current passing through said coil (109) of said relay (104) when said relay controller (304) inputs a control signal
- a reed switch (103) connected in parallel with said switch (110) of said relay (104), wherein said reed switch (103) passes a second current when said reed switch (103) is actuated
- a magnetic coil (102) which actuates said reed switch (103) when a third current passes through said magnetic coil (102),
- an ultrasonic receiver (101) connected to said magnetic coil (102), wherein said ultrasonic receiver (101) energizes said magnetic coil (102) when said ultrasonic receiver (101) receives an ultrasonic signal (108)
- a stand-by controller (205) connected to said stand-by power supply (206) and said relay controller (304), wherein said stand-by controller (205) controls said stand-by power supply (206) and said relay controller (304)
- an ultrasonic transmitter on said remote control (201), wherein said ultrasonic transmitter sends an ultrasonic signal (108) to the said ultrasonic receiver (101).

2. A system according to claim 1 wherein said infrared receiver (203) is in connection with said stand-by controller (205).

3. A system according to claim 1 wherein said infrared receiver (203) is in connection with said microcontroller and said microcontroller is connected to said stand-by controller (205).

4. A system according to claim 1 wherein said infrared receiver (203) is in connection with both said stand-by controller (205) and said microcontroller.

5. A system according to claim 1 wherein said stand-by button (601) controls power off signal of said system.

6. A system according to claim 1 or 5 wherein said stand-by button (601) controls power on signal of said system upon pressing.

7. A system according to claim 1 wherein said remote control (201) comprises a power off button.

8. A system according to claim 1 or 7 wherein said remote control (201) comprises a power on button.

9. A stand-by power method **characterized in that** it comprises a power on method comprising the steps of;
- receiving an ultrasonic signal,
- converting said ultrasonic signal to electrical energy,
- converting said electrical energy to an electro mechanical force,
- actuating a switch using said electro mechanical force,
- switching on a relay (403) and a device (406) using said switch,
and comprises a stand-by or power off method comprising the steps of;
- receiving an infrared signal (407) and
- switching off said relay having received said infrared signal (408).

10. A method according to claim 9 wherein after said actuating a switch using said electro mechanical force step, said method further comprises the steps of;
- checking presence of an infrared signal (405),
- checking presence of said ultrasonic signal if said infrared signal is not present,
- switching off said relay if both said ultrasonic signal and infrared signal are not present (402).

11. A method according to claim 9 wherein after said switching on said relay and said device using said switch step, said method further comprises the steps of;
- checking presence of an infrared signal (405),
- checking presence of said ultrasonic signal if said infrared signal is not present,
- switching off said relay if both said ultrasonic signal and infrared signal are not present (402).

12. A method according to claim 9 wherein said device is put in a stand-by mode (502), before said switching off said relay.

13. A method according to claim 12 wherein a time delay (503) is used after said device is put in a stand-by mode (502).

14. A method according to claim 13 wherein said time delay is adjusted according to a real-time clock (504).

## Patentansprüche

1. Stand-by-Stromsystem mit zumindest einem Relais (104), das zumindest einen Schalter (110) umfasst, der mit einer Leitung (106) und/oder einem Nullleiter (107) des Netzeingangs verbunden ist, einem Infrarotempfänger (203), einer Hauptstromversorgung (204), einer Stand-by-Stromversorgung (206) und einer Fernsteuerung (201), mit einer Stand-by-Taste (601) und einem Infrarotsender, und wobei das System einen Mikrocontroller umfasst, **dadurch gekennzeichnet, dass** es weiterhin umfasst;
- einen Relaiscontroller (304), der in Reihe mit einer Spule (109) des Relais (104) geschaltet ist, wobei der Relaiscontroller (304) einen ersten Strom, der durch die Spule (109) des Relais (104) fließt, unterbricht, wenn der Relaiscontroller (304) ein Steuersignal erhält,
- einen Reedschalter (103), der parallel mit dem Schalter (110) des Relais (104) geschaltet ist, wobei der Reedschalter (103) einen zweiten Strom leitet, wenn der Reedschalter (103) betätigt wird,
- eine magnetische Spule (102), die den Reedschalter (103) betätigt, wenn ein dritter Strom durch die magnetische Spule (102) fließt,
- einen Ultraschallempfänger (101), der mit der magnetischen Spule (102) verbunden ist, wobei der Ultraschallempfänger (101) die magnetische Spule (102) einschaltet, wenn der Ultraschallempfänger (101) ein Ultraschallsignal (108) empfängt,
- einen Stand-by-Controller (205), der mit der Stand-by-Stromversorgung (206) und dem Relaiscontroller (304) verbunden ist, wobei der Stand-by-Controller (205) die Stand-by-Stromversorgung (206) und den Relaiscontroller (304) steuert,
- einen Ultraschallsender auf der Fernsteuerung (201), wobei der Ultraschallsender ein Ultraschallsignal (108) an den Ultraschallempfänger (101) sendet.

2. System nach Anspruch 1, wobei der Infrarotempfänger (203) mit dem Stand-by-Controller (205) in Verbindung steht.

3. System nach Anspruch 1, wobei der Infrarotempfänger (203) mit dem Mikrocontroller in Verbindung steht und der Mikrocontroller mit dem Stand-by-Controller (205) verbunden ist.

4. System nach Anspruch 1, wobei der Infrarotempfänger (203) mit beiden, dem Stand- by-Controller (205) und dem Mikrocontroller, in Verbindung steht.

5. System nach Anspruch 1, wobei die Stand-by-Taste (601) ein Ausschaltsignal des Systems steuert.

6. System nach Anspruch 1 oder 5, wobei die Stand-by-Taste (601) ein Einschaltsignal des Systems nach einem Drücken steuert.

7. System nach Anspruch 1, wobei die Fernsteuerung (201) eine Ausschalttaste umfasst.

8. System nach Anspruch 1 oder 7, wobei die Fernsteuerung (201) eine Einschalttaste umfasst.

9. Stand-by-Stromverfahren, **dadurch gekennzeichnet, dass** es ein Einschaltverfahren mit den folgenden Schritten umfasst;
- Empfangen eines Ultraschallsignals,
- Umwandeln des Ultraschallsignals in elektrische Energie,
- Umwandeln der elektrischen Energie in eine elektromechanische Kraft,
- Betätigen eines Schalters durch die elektromechanische Kraft,
- Einschalten eines Relais (403) und eines Geräts (406) durch den Schalter, und dass es ein Stand-by- oder Ausschaltverfahren mit den folgenden Schritten umfasst;
- Empfangen eines Infrarotsignals (407) und
- Ausschalten des Relais nach dem Empfangen des Infrarotsignals (408).

10. Verfahren nach Anspruch 9, wobei das Verfahren nach dem Schritt des Betätigens eines Schalters durch die elektromechanische Kraft weiterhin die folgenden Schritte umfasst:
- Überprüfen der Anwesenheit eines Infrarotsignals (405),
- Überprüfen der Anwesenheit des Ultraschallsignals, falls das Infrarotsignal nicht anwesend ist,
- Ausschalten des Relais, falls beide, das Ultraschallsignal und das Infrarotsignal, nicht anwesend sind (402).

11. Verfahren nach Anspruch 9, wobei das Verfahren nach dem Schritt des Einschaltens des Relais und des Geräts durch den Schalter-Schritt weiterhin die folgenden Schritte umfasst:
- Überprüfen der Anwesenheit eines Infrarotsignals (405),
- Überprüfen der Anwesenheit des Ultraschallsignals, falls das Infrarotsignal nicht anwesend ist,
- Ausschalten des Relais, falls beide, das Ultraschallsignal und das Infrarotsignal, nicht anwesend sind (402).

12. Verfahren nach Anspruch 9, wobei das Gerät vor dem Ausschalten des Relais in einen Stand-by-Modus (502) gebracht wird.

13. Verfahren nach Anspruch 12, wobei eine Zeitverzögerung (503) angewendet wird nachdem das Gerät in einen Stand-by-Modus (502) gebracht wird.

14. Verfahren nach Anspruch 13, wobei die Zeitverzögerung nach einer Echtzeituhr (504) eingestellt ist.

## Revendications

1. Système électrique de veille comprenant au moins un relais (104), qui comprend au moins un commutateur (110) relié à la ligne (106) et/ou au neutre (107) de l'entrée du secteur, un récepteur infrarouge (203), une alimentation principale (204), une alimentation de veille (206) et une télécommande (201), comprenant un bouton de veille (601) et un émetteur infrarouge, et dans lequel ledit système comprend un microcontrôleur, **caractérisé en ce qu'**il comprend en outre ;
- un contrôleur de relais (304) relié en série à une bobine (109) dudit relais (104), dans lequel ledit contrôleur de relais (304) coupe une première circulation de courant à travers ladite bobine (109) dudit relais (104) lorsque ledit contrôleur de relais (304) produit en entrée un signal de commande
- un commutateur à lames (103) relié en parallèle audit commutateur (110) dudit relais (104), dans lequel ledit commutateur à lames (103) fait circuler un second courant lorsque ledit commutateur à lames (103) est actionné
- une bobine magnétique (102) qui actionne ledit commutateur à lames (103) lorsqu'un troisième courant circule à travers ladite bobine magnétique (102),
- un récepteur à ultrasons (101) relié à ladite bobine magnétique (102), dans lequel ledit récepteur à ultrasons (101) excite ladite bobine magnétique (102) lorsque ledit récepteur à ultrasons (101) reçoit un signal ultrasonore (108)
- un contrôleur de veille (205) relié à ladite alimentation de veille (206) et audit contrôleur de relais (304), dans lequel ledit contrôleur de veille (205) contrôle ladite alimentation de veille (206) et ledit contrôleur de relais (304)
- un émetteur d'ultrasons sur ladite télécommande (201), dans lequel ledit émetteur d'ultrasons envoie un signal ultrasonore (108) audit récepteur à ultrasons (101).

2. Système selon la revendication 1 dans lequel ledit récepteur infrarouge (203) est en liaison avec ledit contrôleur de veille (205).

3. Système selon la revendication 1 dans lequel ledit récepteur infrarouge (203) est en liaison avec ledit microcontrôleur et ledit microcontrôleur est relié audit contrôleur de veille (205).

4. Système selon la revendication 1 dans lequel ledit récepteur infrarouge (203) est en liaison avec à la fois ledit contrôleur de veille (205) et ledit microcontrôleur.

5. Système selon la revendication 1 dans lequel ledit bouton de veille (601) contrôle le signal d'arrêt dudit système.

6. Système selon la revendication 1 ou 5 dans lequel le bouton de veille (601) contrôle le signal de mise en marche dudit système lorsqu'il est enfoncé.

7. Système selon la revendication 1 dans lequel ladite télécommande (201) comprend un bouton d'arrêt.

8. Système selon la revendication 1 ou 7 dans lequel ladite télécommande (201) comprend un bouton de mise en marche.

9. Procédé électrique de veille **caractérisé en ce qu'**il comprend un procédé de mise en marche comprenant les étapes de :
- réception d'un signal ultrasonore,
- conversion dudit signal ultrasonore en énergie électrique,
- conversion de ladite énergie électrique en une force électro-mécanique,
- actionnement d'un commutateur à l'aide de ladite force électro-mécanique,
- allumage d'un relais (403) et d'un dispositif (406) à l'aide dudit commutateur, et comprend un procédé de veille ou d'arrêt comprenant les étapes de :
- réception d'un signal infrarouge (407) et
- extinction dudit relais ayant reçu ledit signal infrarouge (408).

10. Procédé selon la revendication 9 dans lequel, après ledit actionnement d'un commutateur à l'aide de ladite étape de force électro-mécanique, ledit procédé comprenant en outre les étapes de ;
- vérification de la présence d'un signal infrarouge (405),
- vérification de la présence dudit signal ultrasonore si ledit signal infrarouge n'est pas présent,
- extinction dudit relais si lesdits signal ultrasonore et signal infrarouge ne sont pas présents (402).

11. Procédé selon la revendication 9 dans lequel, après ledit allumage dudit relais et dudit dispositif à l'aide de ladite étape de commutation, ledit procédé comprend en outre les étapes de ;
- vérification de la présence d'un signal infrarouge (405),
- vérification de la présence dudit signal ultrasonore si ledit signal infrarouge n'est pas présent,
- extinction dudit relais si lesdits signal ultrasonore et signal infrarouge ne sont pas présents (402).

12. Procédé selon la revendication 9 dans lequel ledit dispositif est mis en mode veille (502), avant ladite extinction dudit relais.

13. Procédé selon la revendication 12 dans lequel une temporisation (503) est utilisée après que ledit dispositif est mis en mode veille (502).

14. Procédé selon la revendication 13 dans lequel ladite temporisation est réglée selon une horloge temps réel (504).
